(19) Europäisches Patentamt
European Patent Office
Office européen des brevets

(11) EP 2 629 987 B1

(12) # EUROPEAN PATENT SPECIFICATION

(45) Date of publication and mention of the grant of the patent:
**10.12.2014 Bulletin 2014/50**

(21) Application number: **11771083.0**

(22) Date of filing: **12.10.2011**

(51) Int Cl.:
***B60C 1/00*** *(2006.01)* ***B60C 9/20*** *(2006.01)*
***C08K 5/3412*** *(2006.01)* ***C08K 5/3415*** *(2006.01)*
***C08L 7/00*** *(2006.01)* ***C08L 9/00*** *(2006.01)*
***C08L 21/00*** *(2006.01)* ***C08L 39/06*** *(2006.01)*
***C08L 9/06*** *(2006.01)* ***C08L 71/02*** *(2006.01)*
***C08K 3/36*** *(2006.01)* ***C08K 3/04*** *(2006.01)*
***C08K 5/54*** *(2006.01)*

(86) International application number:
**PCT/EP2011/067773**

(87) International publication number:
**WO 2012/052328 (26.04.2012 Gazette 2012/17)**

(54) **TYRE FOR VEHICLE WHEELS**
REIFEN FÜR FAHRZEUGRÄDER
PNEUMATIQUE POUR ROUES DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 US 418080 P**
**21.10.2010 IT MI20101930**

(43) Date of publication of application:
**28.08.2013 Bulletin 2013/35**

(73) Proprietor: **Pirelli Tyre S.p.A.**
**20126 Milano (IT)**

(72) Inventors:
- **RESMINI, Emiliano**
  **I-20126 Milano (IT)**
- **BAIONE, Francesca**
  **I-20126 Milano (IT)**
- **DEMERGAZZI, Andrea Angelo**
  **I-20126 Milano (IT)**

(74) Representative: **Longoni, Alessandra**
**AL & Partners Srl**
**Via C. Colombo ang. Via Appiani**
**(Corte del Colone)**
**20038 Seregno (MI) (IT)**

(56) References cited:
**WO-A1-2009/083428**
**JP-A- 2001 192 503**
**JP-A- 2008 274 170**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates to a tyre for vehicle wheels.

PRIOR ART

In the technology field of tyres documents EP 0 763 558, US2004/0220324, US2007/0293622 and US6225397 face problems related to elastomeric compositions for tread tyres and documents EP 1 988 120, WO 2006/066602 and EP 1 557 294 relate to treads for heavy load vehicle wheels.

SUMMARY OF THE INVENTION

Depending on the type of use of vehicle tyres, different characteristics and performances are typically requested.

For example, as regards tyres intended for applications involving high speed operation and/or extreme drive conditions, commonly named HP (High Performance) or UHP (Ultra High Performance), there is the need to arrange high performances in terms, for example, of stability of the tread block, grip, drive stability, stability in cornering, drive comfort.

Otherwise, for tyres intended for the use on heavy vehicles the characteristics typically requested are, for example, traction, directionality and controllability. Another requested characteristic for this type of tyres is a controlled and/or as much as possible regular wear, as to increase tyres performances in terms of mileage and to reduce the noise and the vibrations on running. Particularly, for tyres intended for the use on heavy vehicles in the H category (Highway - street use) characterized by high mileage on paved roads, low rolling resistance and evenness of wear are requested. The tear strength characteristic is also requested among the others, for heavy load vehicle tyres intended for the by/off road use, as for example, truck tyres in service in the quarries.

The Applicant has noticed that most of the above characteristics and problems are connected to the tyre tread as the tread itself represents the interface between the tyre and the street surface and therefore bears the task to directly receive the stresses from the latter.

The behaviour of the tread is then expected according to the type of tyre and its destination of use.

According to the experience of the Applicant, for example, in order to obtain tyres with a low rolling resistance elastomeric materials with low hysteresis are preferably used for the tread band. Such elastomeric materials with low hysteresis are generally characterized by the presence of a mixture of reinforcing fillers based on carbon black and silica.

In fact, the use of reinforcing fillers based on carbon black generally produces an increase of the rolling resistance and in order to obtain an elastomeric material with low hysteresis the at least partial replacement of carbon black with a filler based on silica has been found advantageous.

According to other experiences, it has been noticed that, in order to reduce the rolling resistance of the tyre without significantly affecting the abrasion resistance and grip on the wet, the usual teaching of the known art in the field is to use silica, the so-called silica with a high surface area, that is silica with a BET surface area generally higher than 130 $m^2/g$.

The use of silica with a high surface area allows to improve mechanical properties of the tread band, as for example, the traction resistance, elongation, tear resistance and particularly abrasion resistance.

In the field of heavy vehicle tyres for a mixed by/off road use high characteristics of tear resistance as well as of abrasion resistance are further requested.

For such tyres the mixtures with a high silica content as a reinforcing filler were found advantageous with the disadvantage of a hard processability of such mixtures and with considerable problems of homogeneity of the filler in the mixture that may lead to localized defects.

The Applicant has now found that it is possible to obtain significant improvements of the processability characteristics, of the dynamic and static mechanical characteristic, of tear and abrasion resistance of tyres by using for the tread band a vulcanised elastomeric material obtained by vulcanising an elastomeric composition comprising at least one elastomeric polymer, at least one reinforcing filler selected among hydroxides, oxides and hydrated oxides, salts and hydrated salts of metals or mixtures thereof and at least one pyrrolidone derivative.

The elastomeric materials and the tyres having a tread band comprising said resultant elastomeric materials have a better performance than conventional tyres in various destinations of use.

Particularly, the use of at least one pyrrolidone derivative in the elastomeric material for tread allows to improve the tyre characteristics typical for its destination of use. For example, it is possible to improve the characteristics of abrasion and tear resistance of a tyre for heavy load vehicle wheels, the performance characteristics at low temperature and on the wet for winter tyres, to achieve a reduced rolling resistance both at low temperatures (for example 0°C or

lower) and at high temperatures (for example 70°C or higher) for all seasons vehicle tyres.

According to a first aspect, the present invention relates to a tyre comprising a carcass structure, a tread band disposed in a radially external position to the carcass structure; wherein the tread band comprises a vulcanised elastomeric material obtained by vulcanising an elastomeric composition comprising (a) at least one elastomeric polymer, (b) at least one reinforcing filler selected among hydroxides, oxides and hydrated oxides, salts and hydrated salts of metals or mixtures thereof and (c) at least one pyrrolidone derivative of formula:

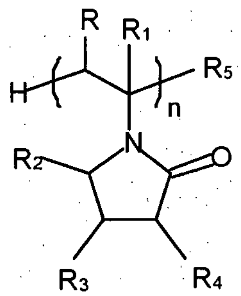

(I)

wherein:

$R_1$, $R_2$, $R_3$, $R_4$ and $R_5$ are hydrogen atoms and R is a $C_6$-$C_{12}$ alkyl or a $C_{16}$-$C_{18}$ alkenyl group;
n is equal to 1 or, when higher than 1, is the number of monomeric units of the corresponding pyrrolidone polymer.

Specific examples of pyrrolidone derivatives of formula (I) according to the present invention are N-ethyl-2-pyrrolidone (marketed for example under the trademark NEP®), N-cyclohexyl-2-pyrrolidone (marketed for example under the trademark CHP®), N-ottyl-2-pyrrolidone (marketed for example under the trademark Surfadone® LP-100), N-dodecyl-2-pyrrolidone (marketed for example under the trademark Surfadone® LP-300), N-oleyl-2-pyrrolidone (marketed for example under the trademark Flexidone 500®), polyvinylpyrrolidone (PVP) and alkylated polyvinylpyrrolidones (marketed for example under the trademark Ganex®).

Particularly preferred are N-ottyl-2-pyrrolidone and N-oleyl-2-pyrrolidone.

The amount of pyrrolidone derivative of formula (I) is generally from about 0.1 phr to about 15 phr, preferably from about 1 phr to about 5 phr, more preferably from about 2 phr to about 3 phr.

According to a preferred aspect of the present invention, the vulcanised elastomeric material further comprises (d) at least one polyethylene glycol.

It is preferably used polyethylene glycol of medium molecular weight (molecular weight from 400 to 6000), more preferably polyethylene glycol of molecular weight from 1500 to 4000.

The use of at least one polyethylene glycol and at least one pyrrolidone derivative of formula (I) in the elastomeric material for tread band according to the present invention produces a further improving effect. In fact, both the processability of the elastomeric material and the rolling resistance and, more generally, the characteristics already improved by the use of the pyrrolidone derivative are higher than the results obtained by using the pyrrolidone derivative of formula (I) alone. The elastomeric material comprising (a) at least one elastomeric polymer, (b) at least one reinforcing filler selected among hydroxides, oxides and hydrated oxides, salts and hydrated salts of metals or mixtures thereof and (c) at least one pyrrolidone derivative of formula (I) according to the present invention can be advantageously used also for the preparation of tread bands useful for the reconstruction of tyres, the so-called retreated tyres.

The amount of reinforcing filler contained in the elastomeric material included in the tyre according to the present invention does not represent a critical parameter but more evident results in terms of improved workability of the elastomeric material are obtained with an amount of reinforcing filler lower or equal to 100 phr, preferably from about 10 phr to about 100 phr, more preferably from about 15 phr to about 70 phr. Among the specific examples of reinforcing fillers that can be used in the present invention silica, alumina, silicates, hydrotalcite, calcium carbonate, kaolin, titanium dioxide and mixtures thereof can be cited.

Among the specific examples of silica, pyrogenic silica, amorphous precipitated silica, wet silica (hydrated silicic acid), fumed silica or mixtures thereof can be particularly cited.

Silica is preferably used, more preferably amorphous precipitated silica with a surface area as described in Standard ISO 5794-1:2005 from about 1 $m^2/g$ to about 200 $m^2/g$, preferably from about 10 $m^2/g$ to about 150 $m^2/g$, more preferably from about 20 $m^2/g$ to about 110 $m^2/g$.

The elastomeric material included in the tyre according to the present invention preferably comprises from about 15 phr to about 70 phr of a silica reinforcing filler.

Examples of silica reinforcing fillers that can be used according to the present invention are commercially

available products under the trademarks Hi-Sil® 190, Hi-Sil® 210, Hi-Sil® 215, Hi-Sil® 233, Hi-Sil® 243 from PPG Industries; Ultrasil® VN2, Uttrasil® VN3, Ultrasil® 7000 from Degussa; Zeosil® 1165MP from Rhodia.

Specific examples of silicates are phyllosilicates, such as for example, montmorillonite, bentonite, nontronite, beidellite, volkonskoite, hectorite, saponite, sauconite, vermiculite, halloysite, sericite or mixtures thereof. Montmorillonite is particularly preferred. These layered materials generally contain exchangeable ions such as sodium ($Na^+$), calcium ($Ca^{2+}$), potassium ($K^+$), magnesium ($Mg^{2+}$), hydroxide ($OH^-$) or carbonate ($CO_3^{2-}$) onto the surfaces between the layers.

The polymeric component of the elastomeric material included in the tyre, according to the present invention, can be formed of any elastomeric polymer or elastomeric polymer mixture commonly used for the production of tyres and particularly for the production of treads.

According to a preferred embodiment of the present invention, the elastomeric polymer (a) is a diene polymer that can be selected from those commonly used in sulphur-crosslinkable elastomeric materials, that are particularly suitable for producing tyres, that is to say from elastomeric polymers or copolymers with an unsaturated chain having a glass transition temperature (Tg) generally below to 20°C, preferably in the range of from 0°C to -110°C. These polymers or copolymers can be of natural origin or can be obtained by polymerization in solution, polymerization in emulsion or gas-phase polymerization of one or more conjugated diolefins, optionally blended with at least one comonomer selected among monovinylarenes and/or polar comonomers in an amount not higher than 60% by weight.

The conjugated diolefins generally contain from 4 to 12, preferably from 4 to 8 carbon atoms and can be selected, for example, among: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-butadiene and isoprene are particularly preferred.

Monovynilarenes, which can optionally be used as comonomers, generally contain from 8 to 20, preferably from 8 to 12 carbon atoms, and can be selected, for example, among: styrene; 1-vinylnaphtalene; 2-vinylnaphtalene; various alkyl, cycloalkyl, aryl, alkylaryl or arylalkyl derivatives of styrene, such as, for example, $\alpha$-methylstyrene, 3-methylstyrene, 4-propylstyrene, 4-cyclohexylstyrene, 4-dodecylstyrene, 2-ethyl-4-benzylstyrerie, 4-p-tolylstyrene, 4-(4-phenylbutyl)styrene, or mixtures thereof. Styrene is particularly preferred.

Polar comonomers, which can be optionally used, can be selected, for example, among: vinylpyrrolidine, vinylquinoline, acrylic acid and alkylacrylic acid esters and nitriles or mixtures thereof, such as, for example, methyl acrylate, ethyl acrylate, methyl metacrylate, ethyl metacrylate, acrylonitrile or mixtures thereof.

Preferably the elastomeric diene polymer (a) that can be used in the present invention can be selected, for example, among: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers or mixtures thereof.

According to a preferred embodiment, said elastomeric material comprises at least 10% by weight of natural rubber, preferably from 20% by weight to 100% by weight of natural rubber, with respect to the total weight of said at least one elastomeric diene polymer (a).

The abovementioned elastomeric material can optionally comprise at least one elastomeric polymer of one or more monoolefins with an olefinic comonomer or derivatives thereof (a'). The monoolefins can be selected among: ethylene and $\alpha$-olefins generally containing from 3 to 12 carbon atoms, such as, for example, propylene, 1-butene, 1-pentene, 1-hexene, 1-octene or mixtures thereof. The following are preferred: copolymers between ethylene and an $\alpha$-olefin, optionally with a diene; isobutene homopolymers or copolymers thereof with small amounts of a diene, which are optionally at least partially halogenated. The optionally present diene generally contains from 4 to 20 carbon atoms and is preferably selected among: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers, or mixtures thereof.

An elastomeric diene polymer (a) or an elastomeric polymer (a') functionalized by reaction with suitable terminating or coupling agents can be optionally used. In particular, the elastomeric diene polymers obtained by anionic polymerization in the presence of an organometallic initiator (particularly an organolithium initiator) can be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes. Optionally, said elastomeric material can also include at least one carbon black reinforcing filler (e).

The additional reinforcing filler can be selected among those used for crosslinked products, particularly carbon black or its aggregates with silica derivatives as described for example in US6057387.

According to a preferred embodiment, the carbon black reinforcing filler (e) that can be used in the present invention can be selected among those having a surface area not less than 20 $m^2/g$ (determined by STSA - statistical thickness surface area according to ISO 18852:2005).

According to a preferred embodiment, said carbon black reinforcing filler (e) is present in the elastomeric material in an amount from about 0.1 phr to about 120 phr, preferably from about 3 phr to about 90 phr. The elastomeric

material can also include at least one silane coupling agent (f).

According to a preferred embodiment, the silane coupling agent (f) that can be used in the present invention can be selected among those having at least a hydrolysable silane group that can be identified, for example, by the following general formula (II):

$$(R')_3Si\text{-}C_nH_{2n}\text{-}X \qquad (II)$$

wherein the groups R', the same or different from each other, are selected among: alkyl, alkoxy or aryloxy groups or among halogen atoms, provided that at least one of the R' groups is an alkoxy or aryloxy group; n is an integer from 1 to 6, extremes included; X is a group selected among: nitroso, mercapto, amino, epoxide, vinyl, imide, chloro, $-(S)_mC_nH_{2n}\text{-}Si\text{-}(R')_3$ or -S-COR', wherein m and n are integers from 1 to 6, extremes included and the R groups are as above defined.

Among the silane coupling agents, those particularly preferred are bis(3-triethoxysilylpropyl)tetrasulphide and bis(3-triethoxysilylpropyl)disulphide. Said coupling agents can be used as such or as a suitable mixture with an inert filler (for example carbon black) as to facilitate their incorporation into the elastomeric material.

According to a preferred embodiment, said silane coupling agent (f) is present in the elastomeric material in an amount from about 0.01 phr to about 10 phr, preferably from about 0.5 phr to about 5 phr.

The abovementioned elastomeric materials can be vulcanised according to known techniques, in particular with sulphur vulcanising systems commonly used for elastomeric diene polymers. For this purpose, after one or more steps of thermo-mechanical treatment, a sulphur vulcanising agent is incorporated into the material together with vulcanisation accelerators. In the final treatment step, the temperature is generally kept below 120° C and preferably below 100°C, so as to avoid any unwanted pre-crosslinking phenomena.

The vulcanising agent more advantageously used is sulphur or molecules comprising sulphur (sulphur donors), with accelerators and activators known to those skilled in the art.

The activators that are particularly effective are zinc compounds and particularly ZnO, $ZnCO_3$, zinc salts of saturated or unsaturated fatty acids containing from 8 to 18 carbon atoms, such as, for example, zinc stearate, which are preferably formed in situ in the elastomeric material from ZnO and fatty acid, as well as BiO, PbO, $Pb_3O_4$, $PbO_2$ or mixtures thereof.

Accelerators that are commonly used can be selected among: dithiocarbamates, guanidine, thiourea, thiazoles, sulphenamides, thiurams, amines, xanthates or mixtures thereof.

Said elastomeric materials can include other commonly used additives selected on the basis of the specific application for which the material is intended. For example, antioxidants, anti-ageing agents, plasticizers, adhesives, anti-ozone agents, modifying resins, fibres (for example Kevlar® pulp) or mixtures thereof can be added to said materials.

Particularly, for the purpose of further improving the processability, a plasticizer, generally selected among mineral oils, vegetable oils, synthetic oils or mixtures thereof, such as for example, aromatic oil, naphtenic oil, phthalates, soybean oil or mixtures thereof, can be added to said elastomeric material. The amount of plasticizer is generally from about 0 phr to about 70 phr, preferably from about 5 phr to about 30 phr.

The abovementioned elastomeric materials can be prepared by mixing together the polymeric components with the reinforcing filler and with the other additives optionally present according to techniques known in the art. The mixing can be carried out, for example, by using an open mixer of open-mill type or an internal mixer of the type with tangential rotors (Banbury) or with interlocking rotors (Intermix) or in continuous mixers of Ko-Kneader (Buss) or of co-rotating or counterrotating twin-screw type.

As used herein, the term "phr" (acronym of parts per 100 parts of rubber) means the parts by weight of a given component of elastomeric material per 100 parts by weight of the elastomeric polymer.

As used herein, except where otherwise indicated, all numbers expressing amounts, quantities, percentages and so forth, are to be understood as being modified in all instances by the term "about". Moreover, all ranges include any combination of the reported maximum and minimum points and include any intermediate ranges therein which can or cannot be specifically enumerated in the present description.

The present description will be further illustrated by some examples which are given for purely indicative purposes and without any limitation to this invention.

SHORT DESCRIPTION OF DRAWINGS

Fig.1 shows a view in cross section of an embodiment of a tyre according to the present invention.

Fig.2 shows a view in cross section of another embodiment of the tyre according to the present invention.

DETAILED DESCRIPTION OF EMBODIMENTS OF THE INVENTION

Identified by reference number 1 in figure 1 a tyre for vehicle wheels is indicated, generally comprising a carcass structure 2 comprising at least a carcass ply 3 having respectively opposite end flaps respectively opposite to respective annular anchoring structures 4, optionally associated with elastomeric fillers 4a, integrated into regions 5 usually identified by the name of "beads". The carcass ply 3 comprises a plurality of reinforcing textile or metallic cords placed in a parallel position to each other and at least partially coated with a layer of an elastomeric material. Associated to the carcass structure 2 is a belt structure 6 comprising one or more belt layers disposed in a radial superposed position with each other and with respect to the carcass ply 3, having typical metallic reinforcing cords.

Such reinforcing cords can have a cross orientation with respect to the direction of the circumferential extension of tyre 1.

In a radially external position to the carcass structure 6 is applied a tread band 7 made of an elastomeric composition containing a pyrrolidone derivative according to the present invention.

On the side surfaces of the carcass structure 2, each extending from one of the side edges of the tread band 7, until close to the respective annular anchoring structure to the beads 5, are moreover applied in an axially external position respective sidewalls 8 of elastomeric composition.

Moreover a radially internal surface of tyre 1 is preferably internally coated with a layer of substantially air-tight elastomeric material or a so-called liner 9.

In the embodiment illustrated in figure 1, tyre 1 is of the type for motor vehicles. Typically, in this case the belt structure 6 further comprises at least a radially external layer including textile cords disposed at a substantially zero angle with respect to the direction of circumferential extension of the tyre.

According to a preferred embodiment of the present invention depicted in figure 2, tyre 100 is of the type for the use for heavy load vehicles. The expression "heavy load vehicle" is used generally to indicate a vehicle belonging to categories M2-M3, N1~N3 and O2~O4 defined in "Consolidated Resolution of the Construction of Vehicles (R.E.3) (1997)". Annex 7. pages 52-59. "Classification and definition of power driven vehicles and trailers", such as for example trucks, lorries, tractor trailers, buses, large vans and other vehicles of this type.

With reference to figure 2, tyre 100 comprises a carcass structure 102, including at least one, preferably two, carcass ply 103 formed by typically metallic reinforcing cords, incorporated into an elastomeric matrix.

The carcass ply 103 has opposite end flaps 103a associated with the respective bead cores 104. The latter are situated into regions 105 of tyre 100 usually identified as "beads".

On the external perimeter edge of the bead cores 104 is applied an elastomeric filler 104a which fills up the determinate space between the carcass ply 103 and the respective end flap 103a of the carcass ply 103. The bead cores 104 maintain the tyre 100 well fixed to the anchoring area which is specifically provided into the wheel rim, thus avoiding, during processing the discharge of bead 105 from that position. Specific reinforcing structures (not illustrated) can be provided at the beads 105 having the function of improving the torque transmission to the tyre 100.

A belt structure 106 is associated to the carcass ply 102 in a radially external position preferably comprising one or more belt layers (in the illustrated specific example three layers 106i, 106ii, 106iii are shown) disposed in a radially superposed position with each other and having typically metallic cords with cross orientation and/or substantially parallel to the direction of circumferential extension of tyre 100. Particularly the belt structure 106 of a tyre for heavy load vehicles typically comprises a belt layer usually known as "stone trap belt", which is the outer radially layer 106i of the belt structure and acts as a protecting layer against the stone and/or gravel penetration into the inner layers of the tyre structure.

A tread bend 107, according to the invention made of elastomeric material, comprising a pyrrolidone derivative, is applied to the belt structure 106 in a radially external position.

According to a further preferred embodiment, the tread band 107 is made according to a "cap and base" method and comprises a radially outer portion 107a superposed to an underlayer 107b. The underlayer is superposed to the belt structure and extends preferably on a surface area that corresponds to the developing surface area of the radially external portion of the tread band. Alternatively, said underlayer extends only on a developing portion of an external radially portion of the tread band, for example, on edges portion opposite to this.

On the lateral edges of the carcass structure 102, both extended from one of the opposed lateral edges 100a of the tread band 107 up at respective beads 105, are further applied respective side walls 108 of elastomeric material.

Preferably, the belt structure of a tyre for heavy load vehicles further comprises a lateral reinforcing stripe (not illustrated) that can be radially superposed on the second belt layer, by an axial end thereof. The lateral stripe is made of a plurality of reinforcing elements, preferably high elongation metallic cords. Furthermore preferably, an insert is disposed substantially by the portion of the edge, that is the portion where the lateral end of the tread band is connected with the edge.

Particularly, the insert has a portion that interposes substantially in a radial sense between the belt structure and the tread band and a portion that interposes substantially in an axial way between the carcass and the edge.

According to further preferred embodiments of the present invention, the tyre is for motorcycles. The outline of

the right section of the tyre for motorcycles (not illustrated) presents a high transversal bend as it has to ensure a sufficient impression area in all the conditions of vehicle's inclinations. The transversal-bend is defined by the value of the ratio between the distance f of the full ridge of the tread from the line through the opposite lateral edges of the tread itself, measured on the equatorial plane of the tyre, and the width C defined by the distance between the opposite lateral edges of the tread itself. With a high transversal bend tyre, a tyre wherein the ratio of transversal bend (f/C) is at least 0.20 is intended. Preferably (f/C) is from 0.20 to 0.5 for a rear tyre and from 0.35 to 0.6 for a front tyre, respectively. In a tyre for motorcycles the belt structure may not be present. The tyre in figure 1 or 2 can be realized through any process known in the art. Typically, a conventionally used process provides the preparation of the above illustrated different tyre components in the form of a semi-worked in a row state, the assembly of semi-worked on one or more drums pack for making a raw tyre and the molding and vulcanisation of a raw tyre in a special mold suitable for vulcanisation press.

TEST DESCRIPTION

The above reported elastomeric materials were prepared in the following way (the amounts of the various components are indicated in phr).

All the components, except sulphur and accelerator, were mixed in an internal mixer (model Pomini PL 1.6) for about 5 minutes (1st phase). When the temperature reached 145°C±5°C, the elastomeric material was discharged. Sulphur and accelerator were added and the mixing was carried out in an open roll mixer (2nd phase).

TEST ON NON-VULCANISED MATERIALS

Mooney ML viscosity (1+4) at 100°C was measured according to Standard ISO 289-1:2005 on non-crosslinked materials, obtained as described above.

The scorch time was measured at 127°C according to Standard ISO 289-2:1994. The crosslinkable elastomeric compositions were subjected to MDR rheometric analysis (according to Standard ISO 6502) using a Monsanto MDR rheometer, the tests being carried out at 170°C for 20 minutes (compositions for vehicle) or 151°C for 60 minutes (compositions for truck) at an oscillation frequency of 1.66 Hz (100 oscillations per minute) and an oscillation amplitude of ±0.5°, measuring the time needed for obtaining an increase of two rheometric units (TS2) and the time needed for reaching 90% of the final torque value (T90). Furthermore, the reversion percentage (RET%) was obtained according the following formula:

$$RET\% = [(MH - Mfinal) / (MH - ML)] \times 100$$

wherein:

MH = maximum couple value;
Mfinal = final couple value;
ML = minimum couple value.

TEST ON VULCANISED MATERIALS

Static mechanical properties were measured according to Standard UNI 6065 on samples of the above reported elastomeric compositions vulcanised at 170°C for 10 minutes (compositions for vehicle) or at 151 °C for 30 minutes (compositions for truck). Dynamic mechanical properties were also measured using an Instron dynamic device in traction-compression mode according to the following methods. A test piece of a crosslinked elastomeric material vulcanised at 170°C for 10 minutes (elastomeric composition for vehicle) and at 151 °C for 30 minutes (elastomeric composition for truck) having a cylindrical shape (length 25 mm-; diameter 14 mm), pre-loading compression up to 25% of longitudinal deformation with respect to the initial length and kept at the prefixed temperature (-10°C, 0°C, 23°C or 70°C) for the whole duration of the test, was subjected to a sinusoidal dynamic stress having an amplitude of ±3.5% with respect to the length under pre-loading, with a 100 Hz frequency. The dynamic mechanical properties are expressed in terms of dynamic elastic modulus (E') and Tan delta (loss factor) values. Tan delta value was calculated as a ratio between viscous modulus (E") and elastic modulus (E').

The hardness in IRHD degrees was measured at 23°C and at 100°C according to Standard ISO 48 on samples of the above reported elastomeric materials vulcanised at 170°C for 10 minutes (compositions for vehicle) or at 151 °C for 30 minutes (elastomeric composition for truck).

The elasticity (%) was measured according to Standard ISO 4662.

Further dynamic mechanical properties were obtained using a Monsanto R.P.A. 2000 rheometer according to the following method: cylindrical test samples with weights in the range from 4.5 g to 5.5 g were obtained by punching the crosslinked elastomeric material of the samples, vulcanised according to the above reported conditions and the samples were subjected to the measurement of the dynamic elastic modulus (G') and dynamic viscous modulus (G") at 70°C, at 10 Hz frequency, deformation 0.4% and 10%. Tan delta value was calculated as a ratio between viscous modulus (G") and elastic modulus (G').

The values of tear resistance were also measured according to Standard ISO 34-1:2004 C on samples of vulcanised elastomeric material.

The abrasion resistance was measured according to Standard DIN 53516 on samples of vulcanised elastomeric material. The lower was the value of removed $mm^3$, the better was the DIN 53516 abrasion resistance.

Blade abrasion is a test of removal of material from a rotating sample with a blade that affects the surface. The test is conducted for a certain number of cycles and the removal is measured for each cycle. The results were evaluated on samples prepared from an elastomeric material according to example 1. The value of the comparative sample test (*) was fixed as a reference at 100 and the test values of the samples according to the invention (A) were referred to the value of the comparative sample test (*).

EXAMPLES 1-3

The elastomeric materials reported in table 1 (elastomeric composition for tread for heavy load vehicles segment H for which high wear resistance characteristics, high mileage and good performance on the wet are requested) were prepared by mixing (the amounts of the various components are given in phr).

TABLE 1

| Example | 1 (*) | 2(^) | 3(^) |
|---|---|---|---|
| NR | 50.00 | 50.00 | 50.00 |
| BR | 50.00 | 50.00 | 50.00 |
| stearic acid | 2.00 | 2.00 | 2.00 |
| silane | 11.00 | 11.00 | 11.00 |
| wax | 1.00 | 1.00 | 1.00 |
| silica | 55.00 | 55.00 | 55.00 |
| oil | 3.00 | 3.00 | 3.00 |
| N-octyl-2-pyrrolidone | --- | 3.00 | 3.00 |
| PEG 1500 | --- | 2.00 | --- |
| zinc oxide | 3.50 | 3.50 | 3.50 |
| TMQ | 1.00 | 1.00 | 1.00 |
| 6-PPD | 2.00 | 2.00 | 2.00 |
| TBBS | 1.50 | 1.50 | 1.50 |
| CTP | 0.20 | 0.20 | 0.20 |

(continued)

| Example | 1 (*) | 2(^) | 3(^) |
|---|---|---|---|
| sulphur | 1.35 | 1.35 | 1.35 |
| (*) comparative - (^) invention<br>NR: natural rubber<br>BR: polybutadiene<br>Stearic acid: Stearin N<br>Silane: X50S® silane coupling agent comprising 50% by weight of carbon black and bis(3-triethoxysilylpropyl)tetrasulfide at 50%<br>Wax: microcrystalline wax Antilux® 654<br>Silica: Zeosil® 1165 MP<br>Oil: paraffin oil Sunpar® 2280<br>N-octyl-pyrrolidone: Surfadone® LP-100<br>Zinc oxide: Rhenogran® ZnO-80<br>TMQ: polymerised 2,2,4-trimethyl-1,2-dihydroquinoline (Vulkanox HS/LG) 6-PPD: para-phenylendiamine Santoflex® 13<br>TBBS: N-tertbutyl-2-benzothiazilsulphenamide (Vulkacit® NZ)<br>CTP: cyclohexylthiophtalimide Vulkalent® G | | | |

The values of Mooney viscosity, scorch time, rheometric analysis and dynamic and static mechanical properties of the materials of examples 1-3 are reported in table 2.

TABLE 2

| Example | 1(*) | 2(^) | 3(^) |
|---|---|---|---|
| Mooney ML viscosity (1+4) | 50.8 | 39.4 | 39.9 |
| Scorch time (min) | 28.8 | 32.4 | 31.7 |
| MDR 60 min 151°C (T90-min) | 20.25 | 20.26 | 20.12 |
| MDR 60 min 151 °C (RET %) | 2.27 | 1.8 | 2.1 |
| Modulus 50% (CA0.5)(MPa) | 1.44 | 1.56 | 1.43 |
| Modulus 100% (CA1)(MPa) | 2.21 | 2.45 | 2.21 |
| Modulus 300% (CA3)(MPa) | 8.85 | 9.53 | 8.6 |
| Tensile strength CR (MPa) | 20.15 | 19.99 | 18.64 |
| Elongation at break | 607.69 | 582.68 | 582.38 |
| Hardness (IRHD) | 75.3 | 76.1 | 75.1 |
| Elasticity (%) | 60.5 | 63.4 | 62.1 |
| Dynamic mechanical properties | | | |
| 0°C 100 Hz | | | |
| E' (MPa) | 8.563 | 8.6 | 8.086 |
| E" (MPa) | 1.933 | 1.991 | 1.907 |
| Tan delta | 0.226 | 0.231 | 0.236 |
| 23°C 100 Hz | | | |
| E' (MPa) | 7.955 | 8.171 | 7.583 |
| E" (MPa) | 1.386 | 1.335 | 1.294 |
| Tan delta | 0.174 | 0.163 | 0.171 |

(continued)

| 70°C 100 Hz | | | |
|---|---|---|---|
| E' (MPa) | 6.973 | 7.287 | 6.737 |
| E" (MPa) | 0.924 | 0.816 | 0.815 |
| Tan delta | 0.132 | 0.112 | 0.121 |
| DIN 53516 abrasion ($mm^3$) | 65.1 | 40.9 | 42 |
| Blade abrasion | 100% | 20.6% | 21.6% |
| Tear resistance (N/mm) | 96.0 | 92.2 | 93.3 |

The materials of examples 2 and 3, according to the present invention, show a decrease of Mooney viscosity (improved processing) with respect to the comparative material. The introduction of the pyrrolidone derivative in examples 2 and 3 produces an increase of the scorch time without producing extreme stretching effects of the T90 value, which involves the possibility of a better safety during composition processability without changing the vulcanisation conditions. Examples 2 and 3 show also the last properties, modulus and IRHD hardness in line with the reference example 1. As regards dynamic properties the introduction of the pyrrolidone derivative gives an advantageous reduction of Tan delta value at 70°C, in example 3, without an extreme reduction of the dynamic modulus at the same temperature, providing a composition with a lower rolling resistance that maintains the stiffness of the material, important performances above all for highway use. Example 3 shows, on the contrary, a maintenance of Tan delta value with a slight reduction of E' modulus at 0°C that means a composition with a better performance on the wet. The combination of the pyrrolidone derivative with polyethylene glycole, as in example 2, produces a positive effect on the above reported properties.

The pyrrolidone derivative does not produce extreme adverse effects on tear as demonstrated by tear values ISO 34C.

From blade abrasion it is noted that the use of the material object of the invention, in examples 2 and 3, produces a strong decrease of the quantity of removed material per cycle, index of a clear improvement in mileage, as also confirmed by the best DIN abrasion values.

EXAMPLES 4-6

The elastomeric materials reported in table 3 were prepared by mixing (elastomeric mixture for tread for heavy load vehicles for in-off road use for which high characteristics of tear resistance and high temperature resistance are particularly requested) (the amounts of the various components are given in phr).

TABLE 3

| example | 4(*) | 5(^) | 6(^) |
|---|---|---|---|
| NR | 85.00 | 85.00 | 85.00 |
| BR | 15.00 | 15.00 | 15.00 |
| stearic acid | 1.00 | 1.00 | 1.00 |
| silane | 3.00 | 3.00 | 3.00 |
| wax | 1.00 | 1.00 | 1.00 |
| carbon black | 45.00 | 45.00 | 45.00 |
| silica | 15.00 | 15.00 | 15.00 |
| zinc oxide | 3.50 | 3.50 | 3.50 |
| PEG 1500 | --- | --- | 1.50 |
| N-octyl-2-pyrrolidone | --- | 2.00 | 2.00 |
| TMQ | 1.00 | 1.00 | 1.00 |
| 6-PPD | 2.00 | 2.00 | 2.00 |
| CBS | 1.00 | 1.00 | 1.00 |

(continued)

| example | 4(*) | 5(^) | 6(^) |
|---|---|---|---|
| CPT | 0.30 | 0.30 | 0.30 |
| sulphur | 1.60 | 1.60 | 1.60 |
| (*) comparative - (^) invention<br>NR: natural rubber<br>BR: polybutadiene<br>Stearic acid: Stearin N<br>Silane: X50S® silane coupling agent comprising 50% by weight of carbon black and bis(3-triethoxysilylpropyl)tetrasulphide at 50%<br>Wax: microcrystalline wax Antilux® 654<br>Silica: Ultrasil® VN3<br>Zinc oxide: Rhenogran® ZnO-80<br>TMQ: polymerized 2,2,4-trimethyl-1,2-dihydroquinoline (Vulkanox HS/LG)<br>CBS: N-cyclohexyl-2-benzothiazyl sulphenamide Vulkacit®<br>N-octyl-2-pyrrolidone: Surfadone® LP-100<br>6-PPD: para-phenylendiamine Santoflex® 13<br>CPT: cyclohexylthiophtalimide Vulkalent® G | | | |

The values of Mooney viscosity, scorch time, rheometric analysis and dynamic and static mechanical properties of the materials of examples 4-6 are reported in table 4.

TABLE 4

| Example | 4(*) | 5(^) | 6(^) |
|---|---|---|---|
| Mooney ML viscosity (1+4) | 202.5 | 102 | 69.2 |
| Scorch time (min) | 38.6 | 35.1 | 41 |
| MDR 60 min 151°C (RET %) | 3.98 | 7.01 | 3.14 |
| MDR 60 min 151°C (T90) | 38.14 | 32.15 | 35.34 |
| Modulus 50% (CA0.5)(MPa) | 1.45 | 1.44 | 1.49 |
| Modulus 100% (CA1)(MPa) | 2.49 | 2.51 | 2.59 |
| Modulus 300% (CA3)(MPa) | 12.59 | 12.34 | 12.63 |
| Tensile strength CR (MPa) | 23.08 | 22.13 | 21.91 |
| Elongation at break | 518.31 | 508.07 | 499.38 |
| Hardness (IRHD) | 68.8 | 68.9 | 70.5 |
| Elasticity (%) | 51.6 | 52.2 | 51.3 |
| Dynamic mechanical properties | | | |
| 0°C 100 Hz | | | |
| E' (M Pa) | 7.269 | 6.903 | 7.232 |
| Tan delta | 0.28 | 0.276 | 0.272 |
| 23°C 100 Hz | | | |
| E' (M Pa) | 6.331 | 6.08 | 6.548 |
| Tan delta | 0.199 | 0.192 | 0.183 |
| 70°C 100 Hz | | | |
| E' (MPa) | 5.519 | 5.464 | 5.65 |

(continued)

| 70°C 100 Hz | | | |
|---|---|---|---|
| Tan delta | 0.144 | 0.135 | 0.125 |
| Tear resistance (N/mm) | 96.0 | 92.2 | 93.3 |

The materials of examples 5 and 6, according to the present invention, show a reduction of Mooney viscosity with respect to the comparative material, index that the use of the pyrrolidone derivative allows a better processability of the composition. The introduction of the pyrrolidone derivative in examples 5 and 6 produces a slightly increase of the scorch time without producing extreme elongation effects of the T90 value, that means the possibility of a better safety during composition processability without changing the vulcanization conditions. Examples 5 and 6 show also the last properties, modulus and IRHD hardness in line with the reference example 4. As regards dynamic properties the introduction of the pyrrolidone derivative give an advantageous reduction of Tan delta value at 70°C in example 5, without an extreme reduction of dynamic modulus at the same temperature, providing a composition with a lower rolling resistance that maintains the stiffness of the material. Example 5 shows, on the contrary, a maintenance of the Tan delta value with a slight reduction of E' modulus at 0°C, index of a composition with a better performance on the wet. The combination of the pyrrolidone derivative with polyethylene glycole, as in example 6, produces a positive effect in the trend of the above described properties. For example 6 higher modulus E' values with respect to the reference 4 are obtained at all temperatures. The pyrrolidone derivative does not produce extreme adverse effects on tear as demonstrated by tear values ISO 34C.

This last property is important for the application on tyres for in-off road use.

EXAMPLES 7-8

The elastomeric materials reported in Table 5 were prepared by mixing (elastomeric mixture for tread of summer tyres for vehicles for which roadholding performance and fuel efficiency characteristics are particularly requested thank to the lower rolling resistance in all the terms of use, both cold and hot) (the amounts of the various components are given in phr).

TABLE 5

| Example | 7(*) | 8(^) |
|---|---|---|
| NR | 15 | 15 |
| BR | 15 | 15 |
| SBR | 70 | 70 |
| silane | 5.6 | 5.6 |
| silica | 65 | 65 |
| stearic acid | 1.5 | 1.5 |
| zinc salts of fatty acids | 2 | 2 |
| wax | 1 | 1 |
| resin | 4 | 4 |
| N-octyl-2-pyrrolidone | --- | 2.00 |
| 6-PPD | 2.5 | 2.5 |
| carbon black | 3 | 3 |
| DPG 80 | 2 | 2 |
| TBBS | 1.6 | 1.6 |
| CPT | 0.3 | 0.3 |

(continued)

| Example | 7(*) | 8(^) |
|---|---|---|
| sulphur | 1 | 1 |
| (*)comparative - (^) invention<br>NR: natural rubber<br>BR: polybutadiene<br>SBR: styrene butadiene polymer, extended oil<br>Stearic acid: Stearin N<br>Silane: liquid bis(3-triethoxysilylpropyl)tetrasulphide<br>Resin: mixture of hydrocarbon resins Kristalex<br>Wax: microcrystalline wax Antilux® 654<br>Zinc salts of fatty acids: mixture of zinc salts of fatty acid (Struktol A50) Silica: Ultrasil® VN3<br>TBBS: N-tertbutyl-2-benzothiazylsulphenamide (Vulkacit® NZ)<br>DPG 80: 80% N,N-diphenylguanidine (Rhenogran DPG-80)<br>N-octyl-2-pyrrolidone: Surfadone® LP-100<br>6-PPD: para-phenylendiamine Santoflex® 13<br>CPT: cyclohexylthiophtalimide Vulkalent® G | | |

The values of Mooney viscosity, scorch time, rheometric analysis and dynamic and static mechanical properties of the materials of examples 7-8 are reported in table 6.

TABLE 6

| Example | 7(*) | 8(^) |
|---|---|---|
| Mooney ML viscosity (1+4) | 78.1 | 73.3 |
| Scorch time (min) | 19.1 | 19.0 |
| MDR 60 min 151°C (RET %) | 1.14 | 2.36 |
| modulus 50% (CA0.5)(MPa) | 1.40 | 1.36 |
| modulus 100% (CA1)(MPa) | 2.37 | 3.37 |
| modulus 300% (CA3)(MPa) | 9.17 | 8.89 |
| Tensile strenght CR (MPa) | 15.70 | 15.36 |
| Elongation at break | 487.74 | 501.34 |
| Hardness (IRHD) 0°C | 74.9 | 72.1 |
| Hardness (IRHD) 23°C | 73.0 | 70.5 |
| Hardness (IRHD) 100°C | 64.1 | 62.6 |
| Elasticity (%) | 37.1 | 42.3 |
| E' (MPa) 0°C 100 Hz | 15.542 | 13.904 |
| E' (MPa) 23°C 100 Hz | 9.656 | 8.860 |
| E' (M Pa) 70°C 100 Hz | 6.086 | 5.859 |
| Tan delta 0°C 100 Hz | 0.629 | 0.616 |
| Tan delta 23°C 100 Hz | 0.317 | 0.282 |
| Tan delta 70°C 100 Hz | 0.151 | 0.131 |
| DIN 53516 abrasion ($mm^3$) | 103.2 | 98.7 |

The material of example 8, according to the present invention. shows a reduction of Mooney viscosity with

respect to the comparative material, maintaining substantially unchanged the break properties. There is a reduction of IRDH hardness. Moreover, the material of example 8 shows a significant reduction of dynamic modulus at low temperature whereas such reduction is lower at high temperature and indicates a better performance on the wet. The change of Tan delta parameters shows on the contrary a reduction of the values in particular at 70°C; index of a lower rolling resistance.

EXAMPLES 9-10

The elastomeric materials reported in table 7 were prepared by mixing (elastomeric mixture for tread of all seasons tyres for vehicles for which long distances characteristics, good grip in the cold and snow, so good performances in all the terms of use, both cold and hot, are requested) (the amounts of the various components are given in phr).

TABLE 7

| Example | 9(*) | 10(^) |
|---|---|---|
| NR | 10.00 | 10.00 |
| SBR | 59 | 59 |
| BR | 27.00 | 27.00 |
| silica | 65.00 | 65.00 |
| carbon black | 3.00 | 3.000 |
| resin | 8.00 | 8.00 |
| N-oleyl-2-pyrrolidone | --- | 3 |
| PEG 1500 | --- | 3 |
| oil | 11.00 | 11.00 |
| wax | 1.50 | 1.50 |
| 6-PPD | 2.50 | 2.50 |
| stearic acid | 2.50 | 2.50 |
| zinc oxides | 2.20 | 2.20 |
| silane | 5.20 | 5.20 |
| zinc salts of fatty acids | 1.00 | 1.00 |
| TBBS | 1.60 | 1.60 |
| TBZTB | 1.20 | 1.20 |
| CPT | 0.40 | 0.40 |

(continued)

| Example | 9(*) | 10(^) |
|---|---|---|
| sulphur | 0.60 | 0.60 |

(*) comparative - (^) invention
NR: natural rubber
BR: polybutadiene
SBR: styrene butadiene polymer, extended oil
Stearic acid: Stearin N
Silane: liquid bis(3-triethoxysilylpropyl)tetrasulphide
Zinc ottoate: zinc ottoate 75 purus
Resin: mixture of hydrocarbon resins Kristalex
Silica: Zeosil® MP 1165
CBS: Vulkacit® N-cyclohexyl-2-benzothiazylsulphenamide
N-octyl-2-pyrrolidone: Surfadone® LP-100
6-PPD: para-phenylendiamine Santoflex® 13
CPT: cyclohexylthiophtalimide Vulkalent® G
TBZTD: tetrabenzilthiuram disulfide Perkacit® TBZTD
Zinc salts of fatty acids: mixture of zinc salts of fatty acids (Struktol A50)
Oil: paraffinic oil Sunpar® 2280
TBBS: N-tertbutyl-2-benzothiazylsulphenamide (Vulkacit® NZ)

The values of Mooney viscosity, rheometric analysis and dynamic and static mechanical properties of the materials of examples 9-10 are reported in table 8.

TABLE 8

| Example | 9(*) | 10(^) |
|---|---|---|
| Mooney ML viscosity (1+4) | 88.8 | 65.7 |
| MDR 20 min 170°C (RET %) | 0.05 | 0 |
| Modulus 50% (CA0.5)(MPa) | 1.55 | 1.65 |
| Modulus 100% (CA1)(MPa) | 2.62 | 2.87 |
| Modulus 300% (CA3)(MPa) | 11.97 | 12.99 |
| Tensile strenght CR (MPa) | 15.36 | 15.33 |
| Elongation at break | 388.41 | 368.81 |
| Hardness (IRHD) 23°C | 73.7 | 75.4 |
| Hardness (IRHD) 100°C | 67 | 69.6 |
| Elasticity (%) | 46.1 | 49.6 |
| Dynamic mechanic properties | | |
| 0°C 100 Hz | | |
| E' (MPa) | 13.88 | 13.659 |
| E" (MPa) | 6.837 | 6.484 |
| Tan delta | 0.493 | 0.475 |
| 23°C 100 Hz | | |
| E' (M Pa) | 9.574 | 9.885 |
| E" (M Pa) | 2.058 | 1.975 |
| Tan delta | 0.215 | 0.2 |

(continued)

| 70°C 100 Hz | | |
|---|---|---|
| E' (MPa) | 7.499 | 7.285 |
| E" (MPa) | 0.849 | 0.705 |
| Tan delta | 0.113 | 0.097 |
| 10°C 100 Hz | | |
| E' (MPa) | 11.177 | 10.929 |
| E" (MPa) | 4.012 | 3.698 |
| Tan delta | 0.359 | 0.338 |

The material of example 10 shows a reduction up to 20% of Mooney viscosity with possible benefits on processability. It is also shown a slight increase of static modulus without making the elongation at break properties worse; it is furthermore evident a significant reduction of thermoplasticity as can be noted from the difference of hardness values IRHD (23°C and 100°C).

At the different temperatures the modulus E' underlines a plasticizer effect caused by the material of the invention, such effect being more evident at low temperatures showing possible improvements of the performance on the wet.

A decrease of Tan delta at all temperature is observed, particularly at 70°C, index of a lower rolling resistance.

EXAMPLES 11-13

The elastomeric materials reported in table 9 were prepared by mixing (elastomeric mixture for tread of winter tyres for vehicles for which characteristics of cold or extreme cold resistance and good grip on iced surface are requested) (the amounts of the various components are given in phr).

TABLE 9

| Example | 11(^) | 12(^) | 13(*) |
|---|---|---|---|
| NR | 10 | 10 | 10 |
| SBR | 68 | 68 | 68 |
| BR | 27 | 27 | 27 |
| silane | 5.6 | 5.6 | 5.6 |
| silica | 70 | 70 | 70 |
| stearic acid | 2.5 | 2.5 | 2.5 |
| wax | 1.5 | 1.5 | 1.5 |
| oil | 7 | 7 | 7 |
| resin | 6 | 6 | 6 |
| N-octyl-2-pyrrolidone | 2 | --- | --- |
| N-oleyl-2-pyrrolidone | --- | 2 | --- |
| zinc oxide | 2.2 | 2.2 | 2.2 |
| 6-PPD | 2.5 | 2.5 | 2.5 |
| carbon black | 5 | 5 | 5 |
| TBBS | 1.6 | 1.6 | 1.6 |
| CTP | 0.3 | 0.3 | 0.3 |
| sulphur | 0.6 | 0.6 | 0.6 |

(continued)

| Example | 11(^) | 12(^) | 13(*) |
|---|---|---|---|
| TBZTD | 1.2 | 1.2 | 1.2 |

(*) comparative - (^) invention
NR: natural rubber
BR: polybutadiene
SBR: styrene butadiene polymer, extended oil
Stearic acid: Stearin N
Silane: liquid bis(3-triethoxysilylpropyl)tetrasulphide
Resin: mixture of hydrocarbon resins Kristalex
Silica: Ultrasil® 7000
Oil: paraffinic oil Sunpar® 2280
N-octyl-2-pyrrolidone: Surfadone® LP-100
N-oley-2-pyrrolidone: Flexidone® 500
6-PPD: para-phenylendiamine Santoflex® 13
Wax: microcrystallin wax Antilux® 654
Zinc oxide: Rhenogran® ZnO-80
CPT: cyclohexylthiophtalimide Vulkalent® G
TBBS: N-tertbutyl-2-benzothiazylsulphenamide (Vulkacit® NZ)
TBZTD: tetrabenzylthiuram disulfide Perkacit® TBZTD

The values of Mooney viscosity, scorch time, rheometric analysis and dynamic and static mechanical properties of the materials of examples 11-13 are reported in table 10.

TABLE 10

| Example | 11(^) | 12(^) | 13(*) |
|---|---|---|---|
| Mooney ML viscosity (1+4) | 68.1 | 70.3 | 72.5 |
| Scorch time (min) | 18.3 | 17.6 | 28.7 |
| MDR 60 min 151°C (RET %) | 0.05 | 0.05 | 0.05 |
| modulus 50% (CA0.5)(MPa) | 1.46 | 1.42 | 1.38 |
| modulus 100% (CA1)(MPa) | 2.52 | 2.44 | 2.38 |
| modulus 300% (CA3)(MPa) | 10.37 | 9.94 | 10.54 |
| Tensile strenght CR (MPa) | 16.4 | 15.9 | 14.9 |
| Elongation at break | 461.3 | 465.8 | 417.2 |
| Hardness (IRHD) 23°C | 74.7 | 73.8 | 75.0 |
| Hardness (IRHD) 100°C | 66.7 | 65.9 | 65.7 |
| Elasticity (%) | 42.1 | 41.8 | 39.0 |
| E' (MPa) 0°C 100 Hz | 14.26 | 12.62 | 14.80 |
| E' (MPa) 23°C 100 Hz | 9.69 | 8.57 | 9.28 |
| E' (MPa) 70°C 100 Hz | 7.38 | 6.77 | 6.71 |
| Tan delta 0°C 100 Hz | 0.478 | 0.477 | 0.480 |
| Tan delta 23°C 100 Hz | 0.243 | 0.237 | 0.250 |
| Tan delta 70°C 100 Hz | 0.124 | 0.123 | 0.140 |

In examples 11 and 12 it is shown a decrease of Mooney viscosity, index of a better processability. The use of pyrrolidone derivatives allows a reduction of modulus E' particularly at low temperatures and with more evidence for the N-oleyl structure used in example 12. Such behaviour is index of a better performance in winter terms of use. For

both examples it is evident a reduction of tan delta, representative of a lower rolling resistance.

From examples 11 and 12 it is also clear that the materials object of the invention do not negatively affect the final properties of the compositions.

Tests on tyres

The Applicant carried out tests on tyres 315/70R22.5 for motor axis. Samples of tyres according to the invention, prepared from an elastomeric material according to example 2 (tyre INV) were subjected to a comparative test of rolling and tear resistance with tyres with a tread prepared according to example 1 (tyre COMP).

Rolling resistance (RR) test

The test according to standard ISO 18164 (RPS90/T) was carried out on a street tyre for evaluating the RR coefficient. In order to compare the results, the coefficient RR values were expressed as percentage, the value of the tyre COMP test was taken as a reference at 100 and the value of tyre INV test was referred to the value of the tyre COMP test. The internal operating temperatures of the tyres were also measured.

The obtained results are the following:

| | | |
|---|---|---|
| Tyre COMP | 100% | 89°C |
| Tyre INV | 72% | 68°C |

Tear test

The tear test was carried out on track on "white street" with an irregular surface, pebbles and dips. The test was carried out by running a vehicle a certain numbers of laps on the track with two rear wheels equipped with tyres 315/70R22.5. The total loss of weight of the two rear wheels was measured. The values of weight loss were expressed as percentage, the value of the tyre COMP test was taken as a reference at 100 and the value of the tyre INV test was referred to the value of the tyre COMP test.

| | |
|---|---|
| Tyre COMP | 100% |
| Tyre INV | 65% |

**Claims**

1. A tyre for vehicle wheels comprising a carcass structure, a tread band disposed in a radially outer position to the carcass structure; wherein the tread band comprises a vulcanised elastomeric material obtained by vulcanising an elastomeric composition comprising (a) at least one elastomeric polymer, (b) at least one reinforcing filler selected among hydroxides, oxides and hydrated oxides, salts and hydrated salts of metals or mixtures thereof and (c) at least one pyrrolidone derivative of formula:

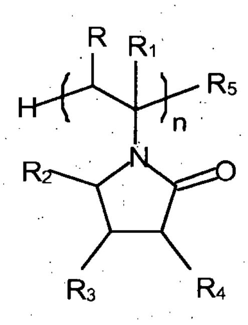

(I)

wherein:

$R_1$, $R_2$, $R_3$, $R_4$ and $R_5$ are hydrogen atoms and R is a $C_6$-$C_{12}$ alkyl or a $C_{16}$-$C_{18}$ alkenyl group;
n is equal to 1 or, when higher than 1, is the number of monomeric units of the corresponding pyrrolidone polymer.

2. A tyre according to claim 1 wherein said elastomeric composition further comprises (d) at least one polyethylene glycol.

3. A tyre according to claim 1 or 2 wherein said elastomeric composition comprises a pyrrolidone derivative of formula (I) wherein $R_1$, $R_2$, $R_3$, $R_4$ and $R_5$ are hydrogen atoms.

4. A tyre according to anyone of the preceding claims wherein said elastomeric composition comprises a pyrrolidone derivative of formula (I) selected among N-octyl-2-pyrrolidone and N-oleyl-2-pyrrolidone.

5. A tyre according to anyone of the preceding claims wherein said tread band comprises an elastomeric material obtained by vulcanising an elastomeric composition comprising a pyrrolidone derivative of formula (I) in an amount from about 0.1 phr to about 15 phr.

6. A tyre according to claim 5 wherein said elastomeric composition comprises a pyrrolidone derivative of formula (I) in an amount from about 1 phr to about 5 phr.

7. A tyre according to claim 6 wherein said elastomeric composition comprises a pyrrolidone derivative of formula (I) in an amount from about 2 phr to about 3 phr.

8. A tyre according to claim 2 wherein said polyethylene glycol is a polyethylene glycol of medium molecular weight.

9. A tyre according to claim 8 wherein said polyethylene glycol is a polyethylene glycol of molecular weight from 1500 to 4000.

10. A tyre according to anyone of the preceding claims wherein said reinforcing filler is in an amount lower or equal to 100 phr.

11. A tyre according to anyone of the preceding claims wherein said reinforcing filler is in an amount from about 10 phr to about 100 phr.

12. A tyre according to anyone of the preceding claims wherein said reinforcing filler is in an amount from about 15 phr to about 70 phr.

13. A tyre according to anyone of the preceding claims wherein said reinforcing filler is silica.

14. A tyre according to anyone of the preceding claims wherein said elastomeric composition further comprises (e) at least one reinforcing filler of carbon black.

15. A tyre according to anyone of the preceding claims wherein said elastomeric composition further comprises (f) at least one silane coupling agent.

16. A tyre tread band comprising a vulcanised elastomeric material obtained by vulcanising an elastomeric composition comprising (a) at least one elastomeric polymer, (b) at least one reinforcing filler selected among hydroxides, oxides and hydrated oxides, salts and hydrated salts of metals or mixtures thereof and (c) at least one pyrrolidone derivative of formula:

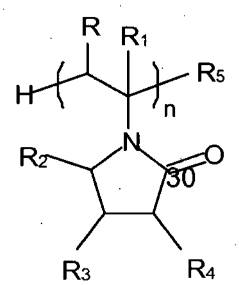

(I)

wherein:

$R_1$, $R_2$, $R_3$, $R_4$ and $R_5$ are hydrogen atoms and R is a $C_6$-$C_{12}$ alkyl or a $C_{16}$-$C_{18}$ alkenyl group;
n is equal to 1 or, when higher than 1, is the number of monomeric units of the corresponding pyrrolidone polymer.

**Patentansprüche**

1. Reifen für Fahrzeugräder, umfassend eine Karkassenstruktur, ein Laufflächenband, das in einer radial äußeren Position zur Karkassenstruktur angeordnet ist; wobei das Laufflächenband ein vulkanisiertes Elastomermaterial umfasst, das durch Vulkanisieren einer Elastomerzusammensetzung erzielt ist, welche umfasst: a) zumindest ein Elastomer-Polymer, b) zumindest einen verstärkenden Füllstoff, der aus Hydroxiden, Oxiden und Oxidhydraten, Salzen und hydrierten Salzen aus Metallen oder Mischungen davon ausgewählt ist, und c) zumindest ein Pyrrolidonderivat mit der Formel:

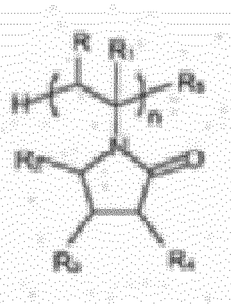

(I)

wobei:

$R_1$, $R_2$, $R_3$, $R_4$ und $R_5$ Wasserstoffatome sind und R ein $C_6$-$C_{12}$ Alkyl oder eine $C_{16}$-$C_{18}$ Alkenylgruppe ist;
n gleich 1 ist oder, wenn höher als 1, die Anzahl monomerer Einheiten des entsprechenden Pyrrolidpolymers ist.

2. Reifen nach Anspruch 1, wobei die Elastomerzusammensetzung ferner d) zumindest ein Polyethylenglykol umfasst.

3. Reifen nach einem der Ansprüche 1 oder 2, wobei die Elastomerzusammensetzung ein Pyrrolidonderivat mit der Formel (I) umfasst, wobei $R_1$, $R_2$, $R_3$, $R_4$ und $R_5$ Wasserstoffatome sind.

4. Reifen nach einem der vorhergehenden Ansprüche, wobei die Elastomerzusammensetzung ein Pyrrolidonderivat mit der Formel (I) umfasst, das aus N-octyl-2-Pyrrolidon und N-oleyl-2-Pyrrolidon ausgewählt ist.

5. Reifen nach einem der vorhergehenden Ansprüche, wobei das Laufflächenband ein Elastomermaterial umfasst, das durch Vulkanisieren einer Elastomerzusammensetzung erzielt ist, welche ein Pyrrolidonderivat mit der Formel (I) in einer Menge von ungefähr 0,1 phr bis ungefähr 15 phr umfasst.

6. Reifen nach Anspruch 5, wobei die Elastomerzusammensetzung ein Pyrrolidonderivat mit der Formel (I) in einer Menge von ungefähr 1 phr bis ungefähr 5 phr umfasst.

7. Reifen nach Anspruch 6, wobei die Elastomerzusammensetzung ein Pyrrolidonderivat mit der Formel (I) in einer Menge von ungefähr 2 phr bis ungefähr 3 phr umfasst.

8. Reifen nach Anspruch 6, wobei das Polyethylenglykol ein Polyethylenglykol mit mittlerem Molekulargewicht ist.

9. Reifen nach Anspruch 8, wobei das Polyethylenglykol ein Polyethylenglykol mit einem Molekulargewicht von ungefähr 1500 bis 4000 ist.

10. Reifen nach einem der vorhergehenden Ansprüche, wobei der verstärkende Füllstoff in einer Menge von weniger als oder gleich 100 phr vorliegt.

**11.** Reifen nach einem der vorhergehenden Ansprüche, wobei der verstärkende Füllstoff in einer Menge von ungefähr 10 phr bis ungefähr 100 phr vorliegt.

**12.** Reifen nach einem der vorhergehenden Ansprüche, wobei der verstärkende Füllstoff in einer Menge von ungefähr 15 phr bis ungefähr 70 phr vorliegt.

**13.** Reifen nach einem der vorhergehenden Ansprüche, wobei der verstärkende Füllstoff Siliciumdioxid ist.

**14.** Reifen nach einem der vorhergehenden Ansprüche, wobei die Elastomerzusammensetzung ferner e) zumindest einen verstärkenden Füllstoff aus Carbon Black umfasst.

**15.** Reifen nach einem der vorhergehenden Ansprüche, wobei die Elastomerzusammensetzung ferner f) zumindest einen Silanhaftvermittler umfasst.

**16.** Laufflächenband, umfassend ein vulkanisiertes Elastomermaterial, das durch Vulkanisieren einer Elastomerzusammensetzung erzielt ist, welche umfasst: a) zumindest ein Elastomer-Polymer, b) zumindest einen verstärkenden Füllstoff, der aus Hydroxiden, Oxiden und Oxidhydraten, Salzen und hydrierten Salzen aus Metallen oder Mischungen davon ausgewählt ist, und c) zumindest ein Pyrrolidonderivat mit der Formel:

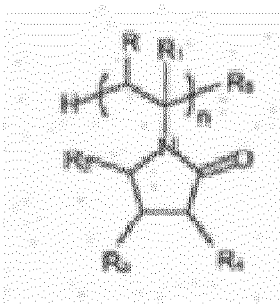

(I)

wobei:

$R_1$, $R_2$, $R_3$, $R_4$ und $R_5$ Wasserstoffatome sind und R ein $C_6$-$C_{12}$ Alkyl oder eine $C_{16}$-$C_{18}$ Alkenylgruppe ist;
n gleich 1 ist oder, wenn höher als 1, die Anzahl monomerer Einheiten des entsprechenden Pyrrolidpolymers ist.

**Revendications**

**1.** Pneu pour roues de véhicule comprenant une structure de carcasse, une bande de roulement disposée dans une position radialement extérieure par rapport à la structure de carcasse ; où la bande de roulement comprend un matériau élastomère vulcanisé obtenu par vulcanisation d'une composition élastomère comprenant (a) au moins un polymère élastomère, (b) au moins une charge de renforcement choisie parmi des hydroxydes, des oxydes et des oxydes hydratés, des sels et des sels hydratés de métaux ou des mélanges de ceux-ci et c) au moins un dérivé de pyrrolidone de formule :

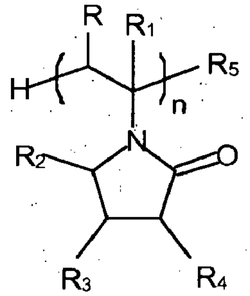

(I)

où :

$R_1$, $R_2$, $R_3$, $R_4$ et $R_5$ représentent des atomes d'hydrogène et R représente un groupe alkyle en $C_6$ à $C_{12}$ ou un groupe alcényle en $C_{16}$ à $C_{18}$ ;
n est égal à 1 ou, lorsqu'il est supérieur à 1, est le nombre d'unités monomères du polymère de pyrrolidone correspondant.

**2.** Pneu selon la revendication 1, dans lequel ladite composition élastomère comprend en outre (d) au moins un polyéthylène glycol.

**3.** Pneu selon la revendication 1 ou 2, dans lequel ladite composition élastomère comprend un dérivé de pyrrolidone de formule (I) où $R_1$, $R_2$, $R_3$, $R_4$ et $R_5$ représentent des atomes d'hydrogène.

**4.** Pneu selon l'une quelconque des revendications précédentes, dans lequel ladite composition élastomère comprend un dérivé de pyrrolidone de formule (I) choisi parmi la N-octyl-2-pyrrolidone et la N-oléyl-2-pyrrolidone.

**5.** Pneu selon l'une quelconque des revendications précédentes, dans lequel ladite bande de roulement comprend un matériau élastomère obtenu par vulcanisation d'une composition élastomère comprenant un dérivé de pyrrolidone de formule (I) en une quantité allant d'environ 0,1 phr à environ 15 phr.

**6.** Pneu selon la revendication 5, dans lequel ladite composition élastomère comprend un dérivé de pyrrolidone de formule (I) en une quantité allant d'environ 1 phr à environ 5 phr.

**7.** Pneu selon la revendication 6, dans lequel ladite composition élastomère comprend un dérivé de pyrrolidone de formule (I) en une quantité allant d'environ 2 phr à environ 3 phr.

**8.** Pneu selon la revendication 2, dans lequel ledit polyéthylène glycol est un polyéthylène glycol de poids moléculaire moyen.

**9.** Pneu selon la revendication 8, dans lequel ledit polyéthylène glycol est un polyéthylène glycol de poids moléculaire allant de 1500 à 4000.

**10.** Pneu selon l'une quelconque des revendications précédentes, dans lequel ladite charge de renforcement est présente en une quantité inférieure ou égale à 100 phr.

**11.** Pneu selon l'une quelconque des revendications précédentes, dans lequel ladite charge de renforcement est présente en une quantité allant d'environ 10 phr à environ 100 phr.

**12.** Pneu selon l'une quelconque des revendications précédentes, dans lequel ladite charge de renforcement est présente en une quantité allant d'environ 15 phr à environ 70 phr.

**13.** Pneu selon l'une quelconque des revendications précédentes, dans lequel ladite charge de renforcement est de la silice.

**14.** Pneu selon l'une quelconque des revendications précédentes, dans lequel ladite composition élastomère comprend en outre (e) au moins une charge de renforcement de noir de carbone.

**15.** Pneu selon l'une quelconque des revendications précédentes, dans lequel ladite composition élastomère comprend en outre (f) au moins un agent de couplage au silane.

**16.** Bande de roulement de pneu comprenant un matériau élastomère vulcanisé obtenu par vulcanisation d'une composition élastomère comprenant (a) au moins un polymère élastomère, (b) au moins une charge de renforcement choisie parmi des hydroxydes, des oxydes et des oxydes hydratés, des sels et des sels hydratés de métaux ou des mélanges de ceux-ci et c) au moins un dérivé de pyrrolidone de formule :

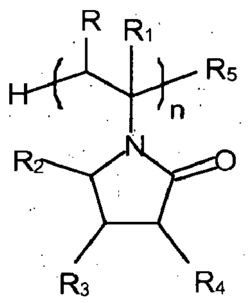

(I)

où :

$R_1$, $R_2$, $R_3$, $R_4$ et $R_5$ représentent des atomes d'hydrogène et R représente un groupe alkyle en $C_6$ à $C_{12}$ ou un groupe alcényle en $C_{16}$ à $C_{18}$ ;
n est égal à 1 ou, lorsqu'il est supérieur à 1, est le nombre d'unités monomères du polymère de pyrrolidone correspondant.

FIG.1

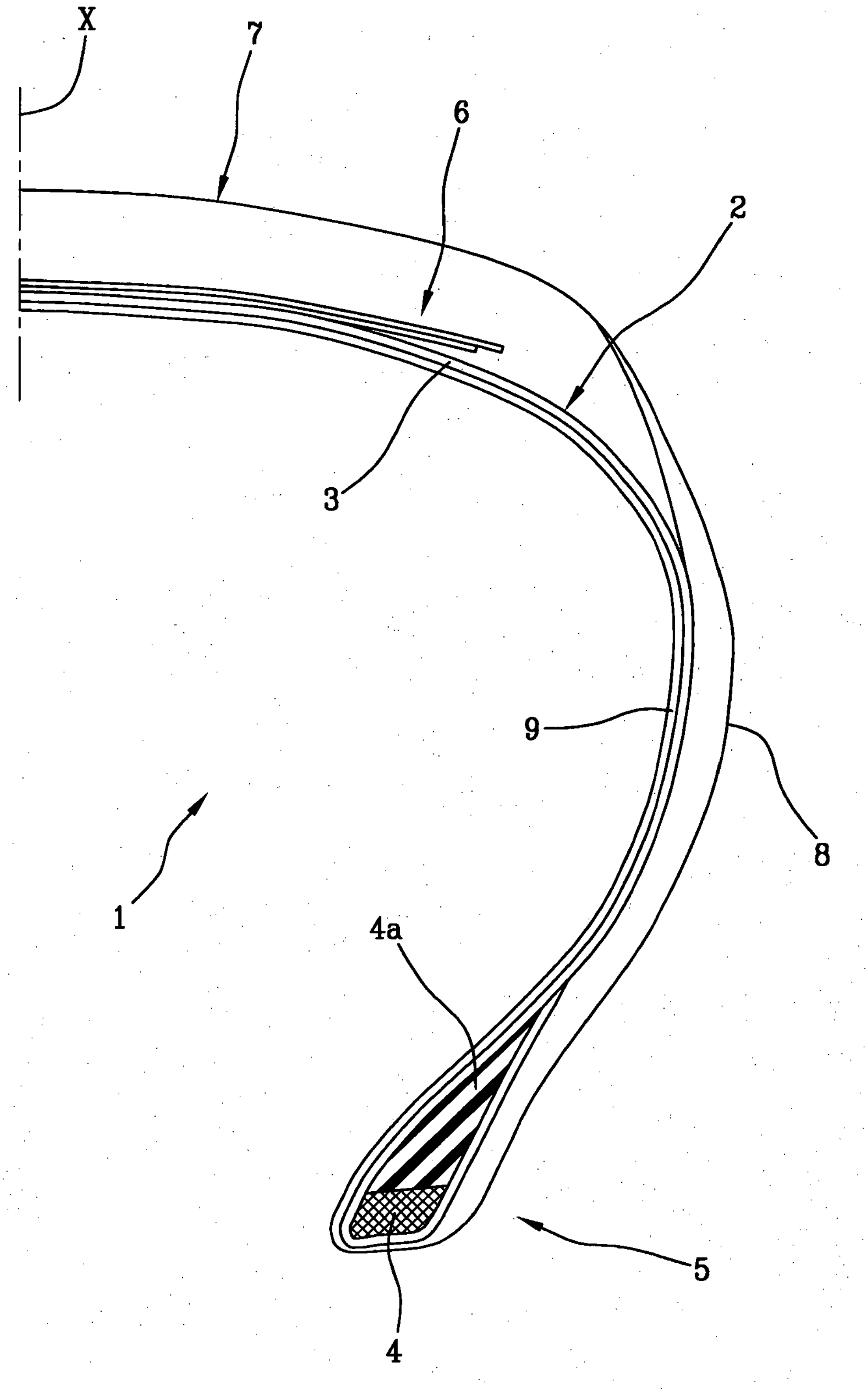

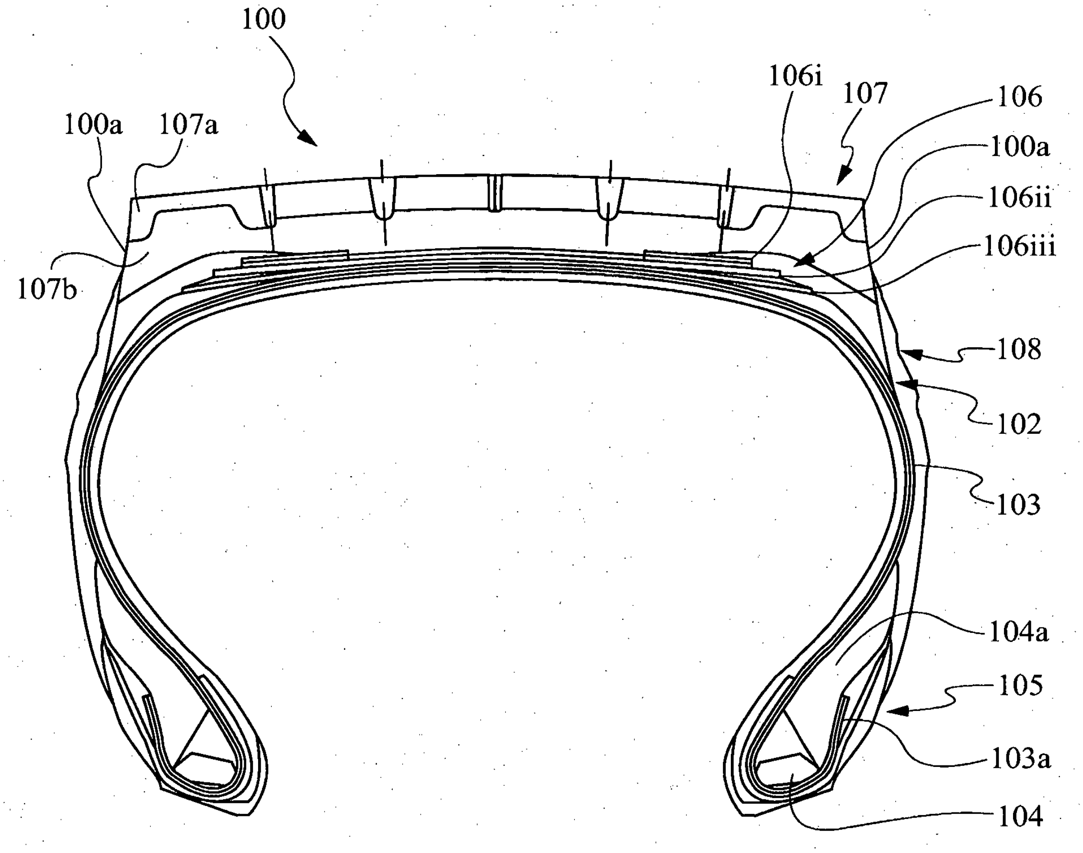
100
100a
107a
106i
107
106
100a
106ii
106iii
107b
108
102
103
104a
105
103a
104

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0763558 A
- US 20040220324 A
- US 20070293622 A
- US 6225397 B
- EP 1988120 A
- WO 2006066602 A
- EP 1557294 A
- US 6057387 A


### Non-patent literature cited in the description


- *Consolidated Resolution of the Construction of Vehicles (R.E.3) (1997),* 1997, 52-59